# EUROPEAN PATENT SPECIFICATION

(11) **EP 4 417 441 B1**
(45) Date of publication and mention of the grant of the patent: **03.09.2025**
(21) Application number: 24156722.1
(22) Date of filing: 09.02.2024
(51) Int. Cl.: B60C 11/13, B60C 11/03

(54) **TIRE**
REIFEN
PNEUMATIQUE

(30) Priority: 15.02.2023 JP 2023021913
(43) Date of publication of application: 21.08.2024
(73) Proprietor: Sumitomo Rubber Industries, Ltd., Kobe-shi, Hyogo-ken 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- JP-A- 2009 046 052
- JP-A- 2013 216 118
- JP-A- H0 195 910
- JP-A- H05 338 413
- JP-A- H11 157 308
- JP-A- H11 180 116
- KR-A- 20190 137 306
- US-A- 4 114 671
- US-A1- 2009 145 529
- US-A1- 2014 338 804

## Description

### BACKGROUND OF THE INVENTION

### Field of the Invention

The present invention relates to a tire.

### Background Art

Japanese Patent No. 5913192 describes a pneumatic tire having lateral grooves provided on a tread portion. Groove wall portions of the lateral grooves include stepped portions each having one to three lateral faces along a tread surface of the tread portion.

A tire having the features of the preamble of claim 1 is known from JP 2009 046052 A and JP H05 338413 A.

In recent years, it has been desired to enhance a shear force with respect to mud and improve mud performance. For example, it is known that the shear force is increased by increasing the groove volume of grooves. However, if the groove volume is simply increased, noise performance is deteriorated.

The present invention has been made in view of the above circumstances, and a main object of the present invention is to improve mud performance while maintaining noise performance.

### SUMMARY OF THE INVENTION

The object is solved by a tire having the features of claim 1. Sub-claims are directed at preferable embodiments of the invention.

The present invention is directed to a tire having a tread portion, wherein at least one groove is provided on the tread portion, the groove includes a pair of groove walls extending inward in a tire radial direction from a tread surface of the tread portion, at least one of the pair of groove walls includes a stepped portion in which a plurality of depth direction surfaces extending in a groove depth direction and a plurality of width direction surfaces extending in a groove width direction are arranged alternately, the plurality of depth direction surfaces include a first depth direction surface extending from the tread surface and a second depth direction surface extending inward of the first depth direction surface in the tire radial direction, a groove width at the second depth direction surface is smaller than a groove width at the first depth direction surface, wherein the groove width at a depth direction surface is a groove width at an outer end in the tire radial direction of each depth direction surface, a length in the groove depth direction of the second depth direction surface is smaller than a length in the groove depth direction of the first depth direction surface, and, in a cross-section orthogonal to a groove center line of the groove, each of the plurality of depth direction surfaces has an angle larger than 90° and not larger than 95° with respect to a tread tangent line.

As a result of adopting the above-described configuration, the tire according to the present invention can improve mud performance while maintaining noise performance.

According to an embodiment of the invention, each of the pair of groove walls includes the stepped portion.

According to an embodiment of the invention, the plurality of depth direction surfaces include a third depth direction surface extending inward of the second depth direction surface in the tire radial direction, a groove width at the third depth direction surface is smaller than the groove width at the second depth direction surface, and a length in the groove depth direction of the third depth direction surface is smaller than the length in the groove depth direction of the second depth direction surface.

According to an embodiment of the invention, the plurality of depth direction surfaces include an innermost depth direction surface located on an innermost side in the tire radial direction, a groove width at the innermost depth direction surface is the smallest among groove widths at the plurality of depth direction surfaces, and the groove width at the innermost depth direction surface is 30% to 50% of the groove width at the first depth direction surface.

According to an embodiment of the invention, a width of each of the plurality of width direction surfaces is 1 to 2 mm.

According to an embodiment of the invention, the groove extends in a zigzag manner on the tread surface in a planar view of the tread portion.

According to an embodiment of the invention, the groove is a lateral groove extending in a tire axial direction.

According to an embodiment of the invention, the groove is a circumferential groove extending in a tire circumferential direction.

### BRIEF DESCRIPTION OF THE DRAWINGS

FIG. 1 is a transverse cross-sectional view of a groove on a tread portion showing a not-claimed embodiment of a tire;
FIG. 2 is a perspective cross-sectional view of the groove in FIG. 1;
FIG. 3 is a transverse cross-sectional view of the groove in FIG. 1;
FIG. 4(A) is a transverse cross-sectional view of the groove having a stepped portion in which an angle θ is more than 90° according to an embodiment of the invention;
FIG. 4(B) illustrates a state when the groove in FIG. 4(A) is brought into contact with the ground;
FIG. 5 is a plan view of the tread portion; and
FIG. 6 is a perspective cross-sectional view of a groove of another embodiment.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

In the present specification, unless otherwise specified, dimensions and the like of components of a tire are values measured in a standardized state. The "standardized state" represents a state in which the tire is fitted on a standardized rim (not shown) and is inflated to a standardized internal pressure and no load is applied to the tire when the tire is a pneumatic tire for which various standards are defined. In the case of a tire for which various standards are not defined, the standardized state means a standard use state, corresponding to the purpose of use of the tire, in which the tire is not mounted on a vehicle and no load is applied to the tire.

The "standardized rim" represents a rim that is defined by a standard for each tire, in a standard system including the standard on which the tire is based, and is, for example, "standard rim" in the JATMA standard, "Design Rim" in the TRA standard, or "Measuring Rim" in the ETRTO standard.

The "standardized internal pressure" represents an air pressure that is defined by a standard for each tire, in a standard system including the standard on which the tire is based, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

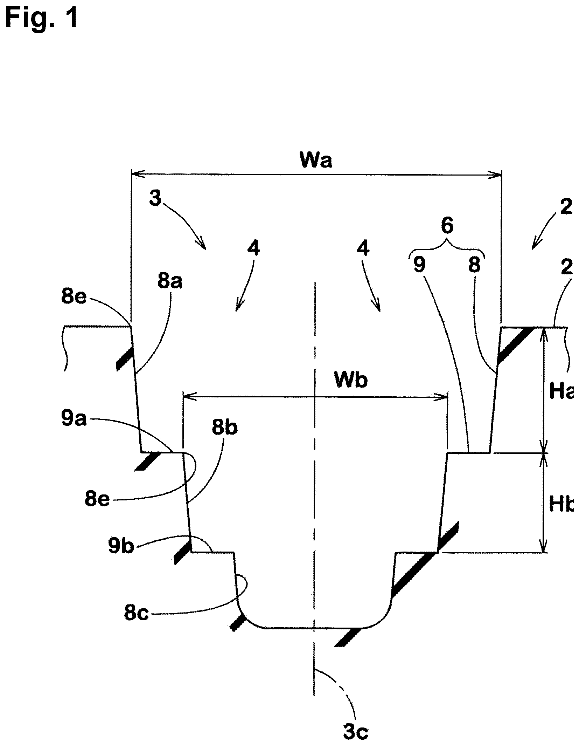

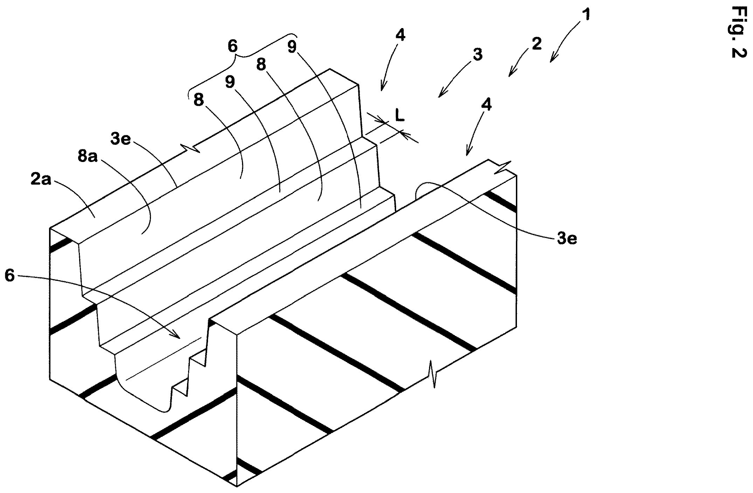

FIG. 1 is a transverse cross-sectional view of a groove 3 provided on a tread portion 2 of a tire 1 showing a not-claimed embodiment. FIG. 2 is a perspective cross-sectional view of the groove 3. The tire 1 of the present embodiment is suitably used, for example, as a pneumatic tire for a passenger car. However, the present invention may be used for a motorcycle pneumatic tire or a heavy duty pneumatic tire, or a non-pneumatic tire the interior of which is not filled with compressed air. FIG. 1 is, more specifically, a cross-sectional view orthogonal to a groove center line 3c of the groove 3.

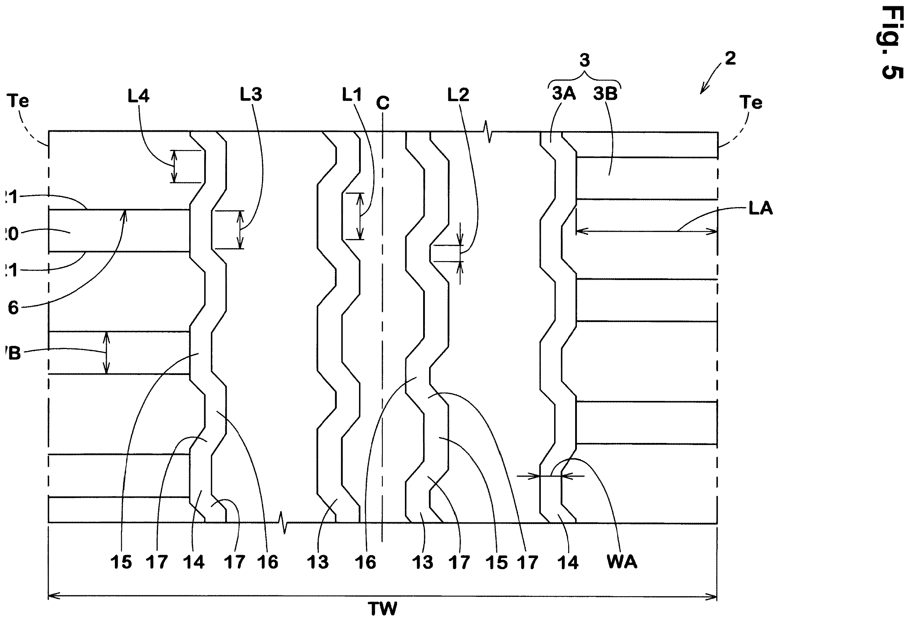

As shown in FIG. 1 and FIG. 2, at least one groove 3 is provided on the tread portion 2. The groove 3 includes a pair of groove walls 4, 4 extending inward in a tire radial direction from a tread surface 2a of the tread portion 2. The tread surface 2a is a region in contact with a flat surface, when the standardized load is applied to the tire 1 in the standardized state and the tire 1 is brought into contact with the flat surface at a camber angle of 0°. In addition, ground-contact positions which are each on an outermost side in a tire axial direction are tread ends Te (shown in FIG. 5) when the tire 1 is brought into contact with the flat surface.

At least one of the pair of groove walls 4, 4 has a stepped portion 6 in which a plurality of depth direction surfaces 8 extending in a groove depth direction and a plurality of width direction surfaces 9 extending in a groove width direction are arranged alternately. With such a stepped portion 6, mud is strongly compacted and is sheared during running on muddy terrain, thereby enhancing a shear force. The groove 3 includes a pair of groove edges 3e extending on the tread surface 2a. Each groove edge 3e is an edge where the tread surface 2a and a first depth direction surface 8a described below intersect each other. In the present specification, the "groove width direction" is the direction of a straight line forming a shortest distance between the groove edges 3e, 3e. The "groove center line 3c" is a line segment formed by connecting midpoints of the shortest distance.

The plurality of depth direction surfaces 8 include the first depth direction surface 8a extending from the tread surface 2a, and a second depth direction surface 8b extending inward of the first depth direction surface 8a in the tire radial direction. A groove width Wb at the second depth direction surface 8b is smaller than a groove width Wa at the first depth direction surface 8a. Accordingly, an excessive increase in the groove volume of the groove 3 is inhibited, and deterioration of noise performance is inhibited. In the present specification, the "groove width at the depth direction surface 8" is a groove width at an outer end 8e in the tire radial direction of each depth direction surface 8.

A length Hb in the groove depth direction of the second depth direction surface 8b is smaller than a length Ha in the groove depth direction of the first depth direction surface 8a. Accordingly, the groove volume at the first depth direction surface 8a on the tread surface 2a side, in which a great contribution to a shear force is made, is increased, and thus a great shear force can be exerted. Therefore, the tire 1 of the present invention can improve mud performance while maintaining noise performance. The ratio (Ha/Hb) of the length Ha of the first depth direction surface 8a to the length Hb of the second depth direction surface 8b is, but is not particularly limited to, preferably not less than 1.3 and more preferably not less than 1.4, and preferably not more than 1.7 and more preferably not more than 1.6. The ratio (Hb/Hc) of the length Hb of the second depth direction surface 8b to a length Hc in the groove depth direction of a third depth direction surface 8c described below is the same as the ratio (Ha/Hb).

In the present embodiment, each of the pair of groove walls 4, 4 includes the stepped portion 6. Accordingly, the above-described effect is effectively exerted. Even when the stepped portion 6 is provided at one of the pair of groove walls 4, 4, an effect of enhancing a shear force is exerted (not shown).

The width direction surfaces 9 include a first width direction surface 9a connecting the first depth direction surface 8a and the second depth direction surface 8b, and a second width direction surface 9b connecting the second depth direction surface 8b and the third depth direction surface 8c. In the present embodiment, each width direction surface 9 extends along a tread tangent line Ta.

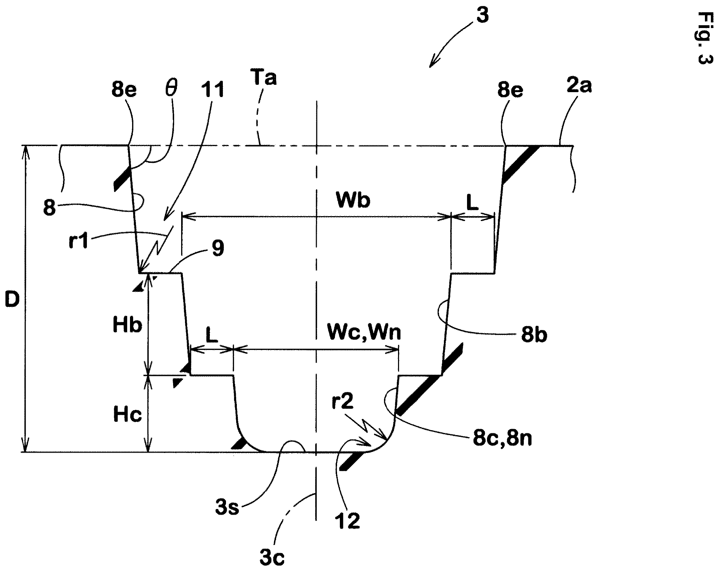

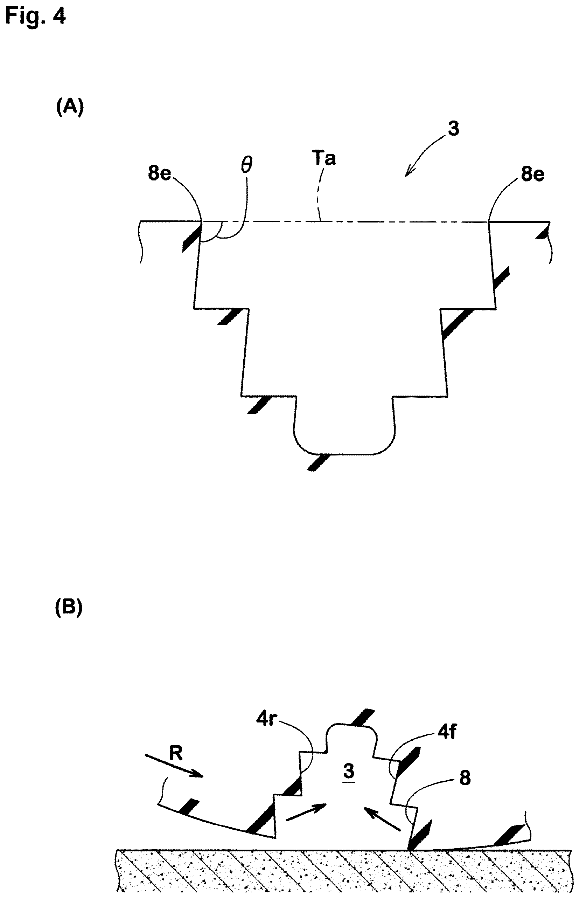

FIG. 3 is a cross-sectional view orthogonal to the groove center line 3c of the groove 3. As shown in FIG. 3, each of the plurality of depth direction surfaces 8 preferably has an angle θ of 85 to 95° with respect to the tread tangent line Ta. If the angle θ is not larger than 85°, mud easily comes out from the groove 3 during ground contact and thus cannot be firmly compacted, so that a shear force is not enhanced in some cases. If the angle θ is larger than 95°, the stiffness of the outer end 8e portion of the depth direction surface 8 decreases, so that damage may occur to the portion and mud performance may be reduced. FIG. 4(A) is a transverse cross-sectional view of the groove 3 in which the angle θ is not smaller than 90°. FIG. 4(B) shows a state in which the groove 3 in FIG. 4(A) is bought into contact with the ground. As shown in FIGS. 4(A) and 4(B), in a case where the groove 3 is inclined relative to the tire circumferential direction, when the groove 3 is brought into contact with the ground, a groove wall 4f on a leading edge side in a rotation direction R is deformed so as to come closer to a groove wall 4r on a trailing edge side in the rotation direction R. In particular, when the angle θ is larger than 90°, mud is pressed inward in the tire radial direction by the depth direction surface 8, so that more mud is caught and firmly compacted. Accordingly, a great shear force is obtained. From such a viewpoint, according to the invention, the angle θ is larger than 90° and not larger than 95°. In the present specification, the tread tangent line Ta is a straight line connecting the outer ends 8e, 8e of the depth direction surfaces 8.

As shown in FIG. 3, the plurality of depth direction surfaces 8 further include the third depth direction surface 8c extending inward of the second depth direction surface 8b in the tire radial direction in the present embodiment. A groove width Wc at the third depth direction surface 8c is smaller than the groove width Wb at the second depth direction surface 8b. Accordingly, an excessive increase in the groove volume of the groove 3 is inhibited.

The length Hc in the groove depth direction of the third depth direction surface 8c is formed smaller than the length Hb in the groove depth direction of the second depth direction surface 8b. Accordingly, the groove volume at the second depth direction surface 8b on the tread surface 2a side, in which a relatively great contribution to a shear force is made, can be increased.

The plurality of depth direction surfaces 8 include an innermost depth direction surface 8n located on an innermost side in the tire radial direction. A groove width Wn at the innermost depth direction surface 8n is formed the smallest among groove widths W of the plurality of depth direction surfaces 8. Accordingly, an excessive increase in the groove volume of the groove 3 can be inhibited. The innermost depth direction surface 8n of the present embodiment is the third depth direction surface 8c. The stepped portion 6 preferably has two to three depth direction surfaces 8 in the groove depth direction, for example.

The groove width Wn at the innermost depth direction surface 8n is preferably not less than 30% and more preferably not less than 35% of the groove width Wa (shown in FIG. 1) at the first depth direction surface 8a , and preferably not more than 50% and more preferably not more than 45% of the groove width Wa. Since the groove width Wn is not less than 30% of the groove width Wa, the groove volume at the innermost depth direction surface 8n is ensured, and a shear force is maintained high. Since the groove width Wn is not more than 50% of the groove width Wa, an increase in the groove volume of the entire groove 3 is inhibited and noise performance is maintained.

A width L of each of the plurality of width direction surfaces 9 is preferably 1 to 2 mm. Since the width L is not smaller than 1 mm, an effect of compacting mud is exerted. Since the width L is not larger than 2 mm, reduction in the groove width W of each depth direction surface 8 is inhibited, and thus the groove volume can be ensured. The width L is a length in the groove width direction.

In the present embodiment, the groove 3 includes a groove bottom 3s connected to the innermost depth direction surfaces 8n and defining a groove depth D of the groove 3. In addition, each stepped portion 6 includes a plurality of outer corner portions 11 at which the depth direction surfaces 8 and the width direction surfaces 9 are connected so as to form internal corners, and an inner corner portion 12 at which the innermost depth direction surface 8n and the groove bottom 3s are connected so as to form an internal corner. In the present embodiment, the inner corner portions 12 are each formed in an arc shape that is convex toward the inner side in the tire radial direction. For example, the outer corner portions 11 are each formed in an arc shape having a radius of curvature r1 smaller than a radius of curvature r2 of the inner corner portion 12, or in a butting manner that the depth direction surface 8 and the width direction surface 9 are butted. A large load acts on the inner corner portions 12 during ground contact. Each inner corner portion 12 is formed in an arc shape having a relatively large radius of curvature r2, whereby damage to the groove 3 can be inhibited and thus mud performance can be maintained for a long time. With the outer corner portions 11, a shear force with respect to mud can be enhanced.

The groove width Wa of the groove 3 provided with such a stepped portion 6 is preferably not smaller than 8 mm and more preferably not smaller than 9 mm, and preferably not larger than 13 mm and more preferably not larger than 11 mm, for example. In addition, the groove depth D of the groove 3 provided with the stepped portion 6 is preferably not smaller than 8 mm and more preferably not smaller than 10 mm, and preferably not larger than 15 mm and more preferably not larger than 13 mm, for example.

FIG. 5 is a plan view of the tread portion 2 of the present embodiment. As shown in FIG. 5, a plurality of the grooves 3 are provided on the tread portion 2. In the present embodiment, the plurality of grooves 3 include circumferential grooves 3A extending in the tire circumferential direction, and lateral grooves 3B extending in the tire axial direction.

For example, the circumferential grooves 3A continuously extend in the tire circumferential direction, and include a pair of crown circumferential grooves 13 disposed on both sides of a tire equator C, and a pair of shoulder circumferential grooves 14 respectively disposed between the crown circumferential grooves 13 and the tread ends Te. Each of the crown circumferential grooves 13 and the shoulder circumferential grooves 14 includes first portions 15 extending in the tire circumferential direction, second portions 16 located inward in the tire axial direction of the first portions 15 and extending in the tire circumferential direction, and third portions 17 each connecting the first portion 15 and the second portion 16. The third portions 17 are, for example, inclined relative to the tire circumferential direction. In each crown circumferential groove 13, a length L1 in the tire circumferential direction of each first portion 15 is formed larger than a length L2 in the tire circumferential direction of each second portion 16. In each shoulder circumferential groove 14, a length L3 in the tire circumferential direction of each first portion 15 and a length L4 in the tire circumferential direction of each second portion 16 are the same. However, the circumferential grooves 3A are not limited to such a mode.

The lateral grooves 3B include shoulder lateral grooves 20 each connecting the shoulder circumferential groove 14 and the tread end Te. The shoulder lateral grooves 20 linearly extend along the tire axial direction, for example. In the present embodiment, each shoulder lateral groove 20 has a groove width WB larger than a groove width WA of the circumferential groove 3A. The groove width WB of the shoulder lateral groove 20 is 1.5 to 2.5 times the groove width WA of the circumferential groove 3A. A length LA in the tire axial direction of the shoulder lateral groove 20 is 15% to 25% of a tread width TW. The lateral grooves 3B are not limited to such a mode, and may include middle lateral grooves (not shown) each connecting the shoulder circumferential groove 14 and the crown circumferential groove 13, or crown lateral grooves (not shown) connecting the crown circumferential grooves 13, 13, for example.

In general, in order to enhance mud performance, the traction of a portion adjacent to each tread end Te is preferably enhanced. Thus, in order to increase a shear force with respect to mud by the shoulder lateral grooves 20, the stepped portions 6 are preferably respectively provided at a pair of groove walls 21, 21 of each shoulder lateral groove 20. The stepped portions 6 may be provided not only at the shoulder lateral grooves 20 but also at the middle lateral grooves or the crown lateral grooves, which are not shown, for example. Accordingly, mud performance is further enhanced. In addition, the stepped portions 6 may not necessarily be provided at the shoulder lateral grooves 20, and may be provided at the middle lateral grooves or the crown lateral grooves, for example. Also, in such a mode, mud performance can be enhanced. Further, the stepped portions 6 may be provided at the crown circumferential grooves 13 or the shoulder circumferential grooves 14, for example. In addition, the stepped portions 6 may be provided at only the third portions 17 of the crown circumferential grooves 13 or the shoulder circumferential grooves 14, or only the first portions 15 or the second portions 16 thereof.

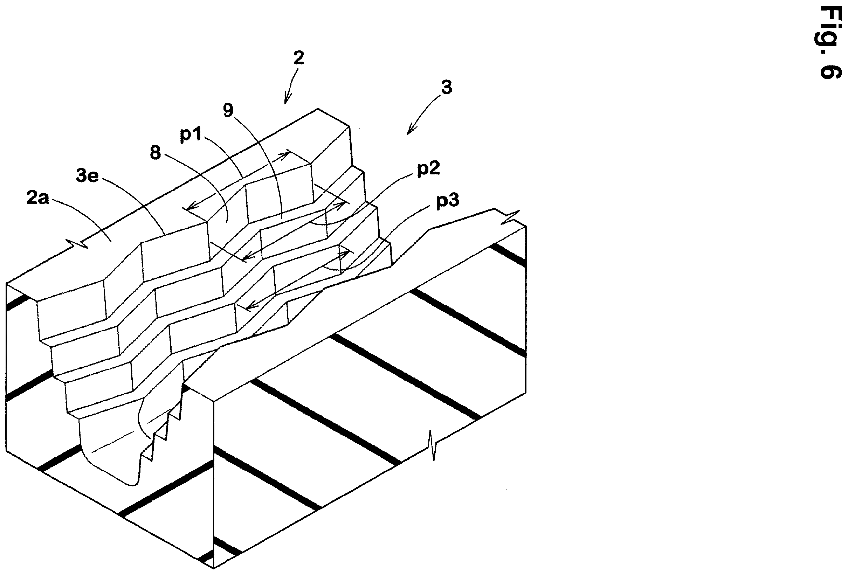

FIG. 6 is a perspective view of a groove 3 of another embodiment. As shown in FIG. 6, the groove 3 of this embodiment extends in a zigzag manner on a tread surface 2a in a planar view of a tread portion 2. In such a mode, an effect of holding mud is high, and thus a shear force with respect to mud can be increased and noise performance can be enhanced.

In this embodiment, a zigzag pitch p1 of the groove edge 3e, a zigzag pitch p2 of the depth direction surface 8, and a zigzag pitch p3 of the width direction surface 9 of the groove 3 are formed to be the same.

Although the embodiments of the present invention have been described in detail above, the present invention is not limited to the above specific embodiments, and various modifications can be made to implement the present invention within the scope of the appended claims.

### EXAMPLES

Tires each having the stepped portion in FIG. 1 and the basic pattern in FIG. 5 were produced as test tires on the basis of specifications in Table 1. Each test tire was tested for mud performance and noise performance. Specifications common to the test tires and test methods are as follows.
Tire size: 265/65R18
Internal pressure (kPa): 230 (all wheels)
Groove at which stepped portion is provided: shoulder lateral groove

### <Mud performance>

Each test tire was mounted on all wheels of a vehicle described below. A test driver drove the vehicle on a test course with muddy terrain. The test driver made sensory evaluation for traveling characteristics regarding handling responsiveness, traction, grip, and the like at that time. The results are indicated as scores with the result of Comparative Example being regarded as 100. The higher the value is, the better the result is.
Vehicle: four-wheel-drive vehicle (SUV) having an engine displacement of 2500 cc

### <Noise performance>

The test driver drove the above-described vehicle on a dry asphalt road surface at a speed of 70 km/h. The test driver made sensory evaluation for noise at that time. The results are indicated as scores with the result of Comparative Example being regarded as 100. The higher the value is, the better the noise performance is.

The results of the tests are shown in Table 1. Thereby, tires of Examples 1, 2 and 5 refer to not-claimed embodiments.

**[Table 1]**

| | Conventional Example | Comp. Ex. | Ex. 1 | Ex. 2 | Ex. 3 | Ex. 4 | Ex. 5 |
|---|---|---|---|---|---|---|---|
| Ha/Hb | - | 1 | 1.3 | 1.3 | 1.3 | 1.3 | 1.3 |
| Angle θ (°) | - | 85 | 80 | 85 | 91 | 95 | 100 |
| Number of depth direction surfaces | Absence | 3 | 3 | 3 | 3 | 3 | 3 |
| L ( mm) | - | 1.6 | 0.8 | 1.2 | 1.6 | 2.0 | 2.4 |
| Wn/Wa (%) | - | 36 | 40 | 38 | 36 | 32 | 28 |
| Groove volume of shoulder lateral groove (ratio) | 100 | 100 | 100 | 100 | 100 | 100 | 100 |
| Mud performance [scores: higher value is better] | 90 | 100 | 105 | 108 | 110 | 110 | 105 |
| Noise performance [scores: higher value is better] | 100 | 100 | 100 | 100 | 100 | 100 | 100 |

As a result of the tests, it is confirmed that the tire of each Examples has improved mud performance while maintaining noise performance.

## Claims

1. A tire (1) having a tread portion (2), wherein
at least one groove (3) is provided on the tread portion (2),
the groove (3) includes a pair of groove walls (4) extending inward in a tire radial direction from a tread surface (2a) of the tread portion (2),
at least one of the pair of groove walls (4) includes a stepped portion (6) in which a plurality of depth direction surfaces (8) extending in a groove depth direction and a plurality of width direction surfaces (9) extending in a groove width direction are arranged alternately,
the plurality of depth direction surfaces (8) include a first depth direction surface (8a) extending from the tread surface (2a) and a second depth direction surface (8b) extending inward of the first depth direction surface (8a) in the tire radial direction,
a groove width (Wb) at the second depth direction surface (8b) is smaller than a groove width (Wa) at the first depth direction surface (8a), wherein the groove width at a depth direction surface (8a, 8b) is a groove width at an outer end (8e) in the tire radial direction of each depth direction surface (8a, 8b), and
a length (Hb) in the groove depth direction of the second depth direction surface (8b) is smaller than a length (Ha) in the groove depth direction of the first depth direction surface (8a),
**characterized in that**
in a cross-section orthogonal to a groove center line (3c) of the groove (3), each of the plurality of depth direction surfaces (8) has an angle (θ) larger than 90° and not larger than 95° with respect to a tread tangent line (Ta).

2. The tire (1) according to claim 1, wherein each of the pair of groove walls (4) include the stepped portion (6).

3. The tire (1) according to claim 1 or 2, wherein
the plurality of depth direction surfaces (8) include a third depth direction surface (8c) extending inward of the second depth direction surface (8b) in the tire radial direction,
a groove width (Wc) at the third depth direction surface (8c) is smaller than the groove width (Wb) at the second depth direction surface (8b), and
a length (Hc) in the groove depth direction of the third depth direction surface (8c) is smaller than the length (Hb) in the groove depth direction of the second depth direction surface (8b).

4. The tire (1) according to claim 3, wherein
the plurality of depth direction surfaces (8) include an innermost depth direction surface (8n) located on an innermost side in the tire radial direction,
a groove width (Wn) at the innermost depth direction surface (8n) is the smallest among groove widths (W) at the plurality of depth direction surfaces (8), and
the groove width (Wn) at the innermost depth direction surface (8n) is 30% to 50% of the groove width (Wa) at the first depth direction surface (8a).

5. The tire (1) according to any one of claims 1 to 4, wherein a width (L) of each of the plurality of width direction surfaces (9) is 1 to 2 mm.

6. The tire (1) according to any one of claims 1 to 5, wherein the groove (3) extends in a zigzag manner on the tread surface (2a) in a planar view of the tread portion (2).

7. The tire (1) according to any one of claims 1 to 6, wherein the groove (3) is a lateral groove (3B) extending in a tire axial direction.

8. The tire (1) according to any one of claims 1 to 6, wherein the groove (3) is a circumferential groove (3A) extending in a tire circumferential direction.

## Patentansprüche

1. Reifen (1) mit einem Laufflächenabschnitt (2), wobei
mindestens eine Rille (3) an dem Laufflächenabschnitt (2) vorgesehen ist,
die Rille (3) ein Paar Rillenwände (4) aufweist, die sich von einer Laufflächen-Oberfläche (2a) des Laufflächenabschnitts (2) in einer Reifenradialrichtung nach innen erstrecken,
mindestens eine des Paars Rillenwände (4) einen Stufenabschnitt (6) aufweist, in dem eine Vielzahl von Tiefenrichtungsflächen (8), die sich in einer Rillentiefenrichtung erstrecken, und eine Vielzahl von Breitenrichtungsflächen (9), die sich in einer Rillenbreitenrichtung erstrecken, abwechselnd angeordnet sind,
die Vielzahl von Tiefenrichtungsflächen (8) eine erste Tiefenrichtungsfläche (8a), die sich von der Laufflächen-Oberfläche (2a) erstreckt, und eine zweite Tiefenrichtungsfläche (8b) aufweist, die sich von der ersten Tiefenrichtungsfläche (8a) in der Reifenradialrichtung nach innen erstreckt,
eine Rillenbreite (Wb) an der zweiten Tiefenrichtungsfläche (8b) kleiner als eine Rillenbreite (Wa) an der ersten Tiefenrichtungsfläche (8a) ist, wobei die Rillenbreite an einer Tiefenrichtungsfläche (8a, 8b) eine Rillenbreite an einem äußeren Ende (8e) in der Reifenradialrichtung jeder Tiefenrichtungsfläche (8a, 8b) ist, und
eine Länge (Hb) in der Rillentiefenrichtung der zweiten Tiefenrichtungsfläche (8b) kleiner als eine Länge (Ha) in der Rillentiefenrichtung der ersten Tiefenrichtungsfläche (8a) ist,
**dadurch gekennzeichnet, dass**
in einem Querschnitt orthogonal zu einer Rillenmittellinie (3c) der Rille (3) jede der Vielzahl von Tiefenrichtungsflächen (8) einen Winkel (θ) größer als 90° und nicht größer als 95° in Bezug auf eine Laufflächentangente (Ta) aufweist.

2. Reifen (1) nach Anspruch 1, wobei jede des Paars Rillenwände (4) den Stufenabschnitt (6) aufweist.

3. Reifen (1) nach Anspruch 1 oder 2, wobei
die Vielzahl von Tiefenrichtungsflächen (8) eine dritte Tiefenrichtungsfläche (8c) aufweist, die sich von der zweiten Tiefenrichtungsfläche (8b) in der Reifenradialrichtung nach innen erstreckt,
eine Rillenbreite (Wc) an der dritten Tiefenrichtungsfläche (8c) kleiner als die Rillenbreite (Wb) an der zweiten Tiefenrichtungsfläche (8b) ist, und
eine Länge (Hc) in der Rillentiefenrichtung der dritten Tiefenrichtungsfläche (8c) kleiner als die Länge (Hb) in der Rillentiefenrichtung der zweiten Tiefenrichtungsfläche (8b) ist.

4. Reifen (1) nach Anspruch 3, wobei
die Vielzahl von Tiefenrichtungsflächen (8) eine innerste Tiefenrichtungsfläche (8n) aufweist, die sich auf einer innersten Seite in der Reifenradialrichtung befindet,
eine Rillenbreite (Wn) an der innersten Tiefenrichtungsfläche (8n) die kleinste unter Rillenbreiten (W) an der Vielzahl von Tiefenrichtungsflächen (8) ist, und
die Rillenbreite (Wn) an der innersten Tiefenrichtungsfläche (8n) 30 % bis 50 % der Rillenbreite (Wa) an der ersten Tiefenrichtungsfläche (8a) beträgt.

5. Reifen (1) nach einem der Ansprüche 1 bis 4, wobei eine Breite (L) von jeder der Vielzahl von Breitenrichtungsflächen (9) 1 bis 2 mm beträgt.

6. Reifen (1) nach einem der Ansprüche 1 bis 5, wobei sich die Rille (3) in einer Draufsicht auf den Laufflächenabschnitt (2) zickzackförmig auf der Laufflächen-Oberfläche (2a) erstreckt.

7. Reifen (1) nach einem der Ansprüche 1 bis 6, wobei die Rille (3) eine Querrille (3B) ist, die sich in einer Reifenaxialrichtung erstreckt.

8. Reifen (1) nach einem der Ansprüche 1 bis 6, wobei die Rille (3) eine Umfangsrille (3A) ist, die sich in einer Reifenumfangsrichtung erstreckt.

## Revendications

1. Pneumatique (1) ayant une portion formant bande de roulement (2), dans lequel
au moins une rainure (3) est prévue sur la portion formant bande de roulement (2),
la rainure (3) inclut une paire de parois de rainure (4) s'étendant vers l'intérieur dans une direction radiale du pneumatique depuis une surface de bande de roulement (2a) de la portion formant bande de roulement (2),
au moins une de la paire de parois de rainure (4) inclut une portion en gradin (6) dans laquelle une pluralité de surfaces de direction de profondeur (8) s'étendant dans une direction de la profondeur de la rainure et une pluralité de surfaces de direction de largeur (9) s'étendant dans une direction de la largeur de la rainure sont agencées en alternance,
la pluralité de surfaces de direction de profondeur (8) inclut une première surface de direction de profondeur (8a) s'étendant depuis la surface de bande de roulement (2a) et une deuxième surface de direction de profondeur (8b) s'étendant vers l'intérieur de la première surface de direction de profondeur (8a) dans la direction radiale du pneumatique,
une largeur de rainure (Wb) au niveau de la deuxième surface de direction de profondeur (8b) est inférieure à une largeur de rainure (Wa) au niveau de la première surface de direction de profondeur (8a), dans lequel la largeur de rainure au niveau d'une direction de surfaces de profondeur (8a, 8b) est une largeur de rainure au niveau d'une extrémité extérieure (8e) dans la direction radiale du pneumatique de chaque surface de direction de profondeur (8a, 8b), et
une longueur (Hb) dans la direction de profondeur de rainure de la deuxième surface de direction de profondeur (8b) est inférieure à une longueur (Ha) dans la direction de profondeur de rainure de la première surface de direction de profondeur (8a),
**caractérisé en ce que**
dans une section transversale orthogonale à une ligne centrale de rainure (3c) de la rainure (3), chacune de la pluralité de surfaces de direction de profondeur (8) a un angle (θ) qui est supérieur à 90° et qui n'est supérieur à 95° par rapport à une ligne tangente de bande de roulement (Ta).

2. Pneumatique (1) selon la revendication 1, dans lequel chacune de la paire de parois de rainure (4) inclut la portion en gradin (6).

3. Pneumatique (1) selon la revendication 1 ou 2, dans lequel
la pluralité de surfaces de direction de profondeur (8) inclut une troisième surface de direction de profondeur (8c) s'étendant vers l'intérieur de la deuxième surface de direction de profondeur (8b) dans la direction radiale du pneumatique,
une largeur de rainure (Wc) au niveau de la troisième surface de direction de profondeur (8c) est inférieure à la largeur de rainure (Wb) au niveau de la deuxième surface de direction de profondeur (8b), et
une longueur (Hc) dans la direction de profondeur de rainure de la troisième surface de direction de profondeur (8c) est inférieure à la longueur (Hb) dans la direction de profondeur de rainure de la deuxième surface de direction de profondeur (8b).

4. Pneumatique (1) selon la revendication 3, dans lequel
la pluralité de surfaces de direction de profondeur (8) incluent une surface de direction de profondeur la plus à l'intérieur (8n) située sur un côté le plus à l'intérieur dans la direction radiale du pneumatique,
une largeur de rainure (Wn) au niveau de la surface de direction de profondeur la plus à l'intérieur (8n) est la plus petite parmi des largeurs de rainure (W) au niveau de la pluralité de surfaces de direction de profondeur (8), et
la largeur de rainure (Wn) au niveau de la surface de direction de profondeur la plus à l'intérieur (8n) est de 30 % à 50 % de la largeur de rainure (Wa) au niveau de la première surface de direction de profondeur (8a).

5. Pneumatique (1) selon l'une quelconque des revendications 1 à 4, dans lequel une largeur (L) de chacune de la pluralité de surfaces de direction de largeur (9) est de 1 à 2 mm.

6. Pneumatique (1) selon l'une quelconque des revendications 1 à 5, dans lequel la rainure (3) s'étend en zigzag sur la surface de bande de roulement (2a) dans une vue en plan de la portion formant bande de roulement (2).

7. Pneumatique (1) selon l'une quelconque des revendications 1 à 6, dans lequel la rainure (3) est une rainure latérale (3B) s'étendant dans une direction axiale du pneumatique.

8. Pneumatique (1) selon l'une quelconque des revendications 1 à 6, dans lequel la rainure (3) est une rainure circonférentielle (3A) s'étendant dans une direction circonférentielle du pneumatique.
